# EUROPEAN PATENT APPLICATION

(11) **EP 1 156 408 A1**
(43) Date of publication of application: **21.11.2001**
(21) Application number: 99961408.4
(22) Date of filing: 27.12.1999
(51) Int. Cl.: G06F 3/06, G11B 17/22

(54) **LIBRARY SYSTEM**

(30) Priority: 28.12.1998 JP 37286298
(71) Applicant: Asaca Corporation, Hino-shi, Tokyo 191-0065 (JP)
(72) Inventor: KUWAYAMA, Noritada, Hino-shi Tokyo 191-0065 (JP)
(74) Representative: Manitz, Finsterwald & Partner GbR
(86) International application number: JP9907324
(87) International publication number: WO0041063

(57) **Abstract**

A library system (10) includes a host computer (12), a library unit (16), and a communication apparatus (18) for connecting the host computer and the library unit. In a cabinet (22), the library unit includes a recording medium storage (30) divided into a plurality of storage stations (30₀, 30₁, 30₂), and a recording medium reproduction section (32) divided into a plurality of reproduction stations (32₀, 32₁, 32₂) corresponding to the storage stations. The storage stations cooperate with the corresponding reproduction stations to compose virtual units (36₀, 36₁, 36₂), respectively. The host computer is provided with applications (44₀, 44₁, 44₂) corresponding to the virtual units to control the virtual units individually.

## Description

### FIELD OF THE INVENTION

The present invention relates to a library system for storing a plurality types of information recording media (e.g., CD-ROMs, DVD-RAMs, DVD-ROMs), and for unloading and then reproducing any one of the stored information recording media.

### BACKGROUND OF THE INVENTION

There have been known library systems or jukeboxes for storing a number of information recording media including read-only or rewritable magnetic disks / optical magnetic disks and/or tape units, and unloading to reproduce a selected information recording medium. Some of them include one library unit that houses a number of recording medium storage sections, a plurality of recording medium reproduction sections, and a transfer sections for transferring a recording medium between the recording medium storage sections and the recording medium reproduction sections. In the meantime, with a development of the communication facilities, another types of systems having a plurality of library units are becoming to be popular.

Meanwhile, the library system requires a suitable application program or programs in accordance with the type of information recording media and the intended use of the system. For this purpose, for example AMASS™ is available for using the system as a virtual file system, Tracer™ for recording in and reading from an optical magnetic disk, SmartCD™ for reading a CD-ROM and a CD-R, and Networker™ for the backup of data.

However, in a conventional library system, one application is associated with one library unit. This results in that for a library system with a plurality of library units, each application is correlated with each library unit. Hence, for instance, when a user having one unit only for reading information from CD-ROMs wishes to record CD-ROM's data in a tape unit, the user has no other option but to purchase an additional unit and use the same as a unit only for the tape unit.

### SUMMARY OF THE INVENTION

Accordingly, an object of the present invention is to provide a library system in which one library unit is divided into a plurality of virtual units so that it is possible to use the divided plurality of virtual units each as an individually controllable library unit. Further, another object of the present invention is to provide a library system in which it is possible to individually control virtual units which are across more than one library units.

To achieve the objects above, a library system according to a first embodiment of the present invention specifically comprises a host computer, a library unit, and a communication apparatus which connects the host computer and the library unit with each other for communications. The library unit above comprises one cabinet, and disposed in the cabinet are; a plurality of recording medium storage sections, a plurality of recording medium reproduction sections which receive recording media which are stored in the respective recording medium storage sections and reproduce the recording media; a recording medium transportation section for transporting the recording media each between the recording medium storage sections and the recording medium reproduction sections and a controller for controlling the recording medium reproduction sections; and the recording medium transportation section. The plurality of recording medium storage sections above are divided into a plurality of storage stations, the plurality of recording medium reproduction sections are divided into a plurality of reproduction stations which correspond to the storage stations, and each storage station and the corresponding reproduction station constitute a virtual unit. The host computer described above includes applications which correspond to the virtual units above to control the virtual units individually, and controls the virtual units in accordance with the corresponding applications.

A library system according to a second embodiment of the present invention comprises a host computer, a first and a second library units, and a communication apparatus which connects the host computer and the first and the second library units with each other for communications. Each one of the first and the second library units comprises one cabinet which is independent of other library units, and disposed in the cabinet are: a recording medium storage section; a recording medium reproduction section which receives a recording medium which is stored in the recording medium storage section and reproduces the recording medium; a recording medium transportation section for transporting the recording medium between the recording medium storage section and the recording medium reproduction section; and a controller for controlling the recording medium reproduction section and the recording medium transportation section. At least a portion of the recording medium storage section and at least a corresponding portion of the recording medium reproduction section constitute a virtual unit portion, and the virtual unit portion in the first library unit and the virtual unit portion in the second library unit above constitute one virtual unit. The host computer described above includes applications which correspond to the virtual units above to control the virtual units individually, and controls the virtual units in accordance with the corresponding applications.

### BRIEF DESCRIPTION OF THE DRAWINGS

Fig. 1 is a schematic diagram showing an overall structure of a library system according to the present invention;
Fig. 2 is a side elevational view showing a structure of a library unit for use in the library system shown in Fig. 1;
Fig. 3 is a schematic view showing a structure of virtual units in the library system in Fig. 1;
Fig. 4 is a schematic view of a structure in which two virtual units share portions of a storage section and a reproduction section;
Fig. 5 is a schematic side elevational view showing a structure of a library system having a plurality of library units;
Fig. 6 is a schematic view for describing a logical structure of a controller included in the library system in Fig. 5;
Fig. 7 is a schematic side elevational view showing a structure of a library system having other communication apparatus;
Fig. 8 is a schematic side elevational view showing that controllers in library units arranged in a raw are connected with each other by infrared devices; and
Fig. 9 is a schematic view of a structure in which a plurality of virtual units share one I/E section.

### DETAILED DESCRIPTION OF THE PREFERRED EMBODIMENTS

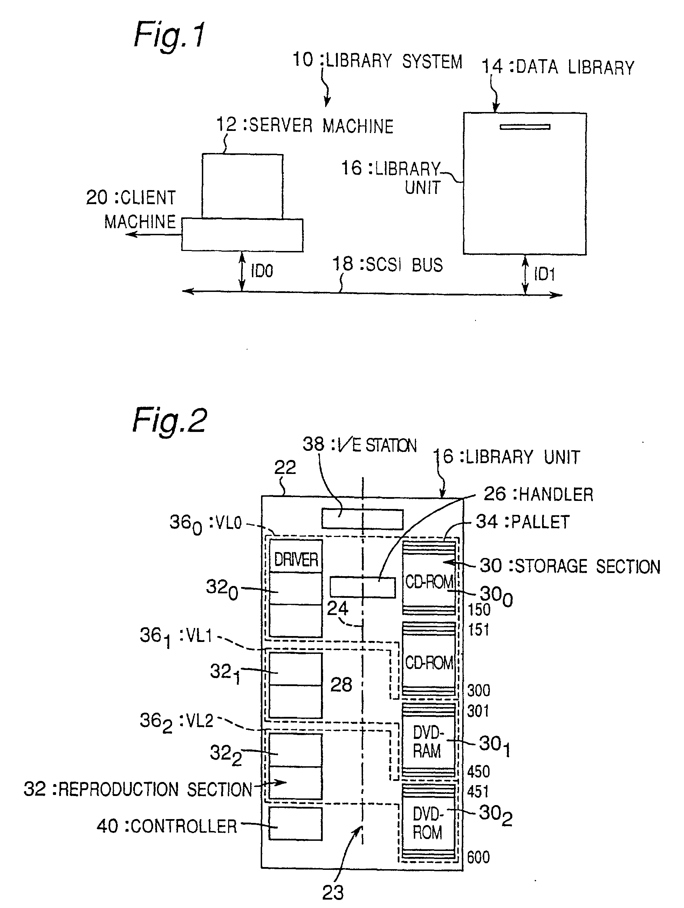

With reference to the drawings, preferred embodiments according to the present invention will be described hereinafter. Fig. 1 shows a general structure of a library system 10 according to the present invention. The library system 10 (hereinafter referred to simply as "system 10") has a server machine (host computer) 12 which functions as a controller for controlling the system 10 as a whole, and a data library (or jukebox) 14 which stores and reproduces a number of recording media. In this embodiment, the data library 14 includes a library unit 16. Used for the electric connection between the server machine 12 and the library unit 16 is an input/output interface (communication device), SCSI (Small Computer System Interface). Specifically, the server machine 12 and the library unit 16 are communicated to each other through a SCSI bus 18, allowing the library unit 16 to operate in response to a signal from the server machine. Of course, the server machine 12 may be connected with one or more client machine (computer) 20 so that the library unit 16 operates in response to a signal from the client machine 20. The server machine 12 and the client machine 20 may be any one type of computers currently available on networks. Further, a variety of operating systems currently available on networks, including Windows NT™, Linux™ and Solaris™, may be used for controlling the server machine 12 and the client machines 20 systematically on the network.

Next, Fig. 2 shows a schematic structure of the library unit 16. The library unit 16 has a housing or cabinet 22 for receiving various components (described in detail hereinafter) contained in the library unit 16. Mounted within the cabinet 22 is a recording medium transfer section 23. The recording medium transfer section 23 has a guide 24 arranged in the vertical direction. The guide 24 supports a handler (recording medium transfer section) 26 for the transfer of a recording medium so that the handler 26 moves ups and downs along the guide 24 and rotates around the guide 24 or another vertical axis. Structures of the recording medium transfer section 23, the guide 24 and the handler 26 are described in detail in the U.S. patent application No. 09/380,217 filed by the applicant of this application, which is incorporated herein by reference. It should be noted that the structure of the recording medium transfer section 23 is not limited to this embodiment.

A recording medium storage section 30 and a recording medium reproduction section 32 are provided around a space in which the handler 26 moves ups and downs and rotates about the vertical axis. In the preferred embodiment, the storage and reproduction sections, 30 and 32, are arranged so that they surround the space 30. However, the storage and reproduction sections may be arranged in the form of matrix on a vertical wall, so that the recording medium transportation section moves in the. vertical and horizontal directions. This type of library system is described in the U.S. patent application No. 08/980,059, which is incorporated herein by reference.

In this embodiment, the recording medium storage section 30 has six hundreds of pallets 34 arranged in tiers so that six hundreds of recording medium in the form of disc with normal size (diameter of about 12cm) can be housed in the section. Also in this embodiment, the storage section 30 is divided into three storage stations 30₀, 30₁, and 30₂ for receiving three types of disc-like recording media, e.g., CD-ROMs, DVD-RAMs and DVD-ROMs. More specifically, in this preferred embodiment, the first to the 300th pallets 34 are allotted to the storage station 30₀ for the storage of CD-ROMs, the 301st to the 450th pallets 34 to the storage station 30₁ for the storage of DVD-RAMs, and the 451st to the 600th pallets 34 to the storage station 30₂ for the storage of DVD-ROMs. It should be noted that the number of the storage stations and the types of recording media to be stored in the respective storage stations are not limited to this embodiment.

The recording medium reproduction section 32 is divided into three reproduction stations 32₀, 32₁ and 32₂ corresponding to the three types of recording media (CD-ROMs, DVD-RAMs and DVD-ROMs) stored in the storage section 30. Each reproduction station has one or more drives (recording medium reproduction device) capable of reproducing corresponding recording media. Although the reproduction section is divided into three to store the three types of recording media in this preferred embodiment, it is preferable to divide the reproduction section into four where there are four or more types of recording media. Where one reproduction device can reproduce two or more types of recording media, the number of the reproduction stations may be smaller than that of the storage stations.

The three reproduction stations 32₀, 32₁ and 32₂ correspond to the three storage stations 30₀, 30₁ and 30₂, respectively. The storage station 30₀ and the reproduction station 32₀ constitute a virtual unit 36₀, the storage station 30₁ and the reproduction station 32₁ constitute a virtual unit 36₁, and the storage station 30₂ and the reproduction station 32₂ constitute a virtual unit 36₂.

An I/E (Import/Export) station 38 for loarding and unloading the recording media into and from the cabinet 22 is positioned in an upper portion of the library unit 16 to face an upper portion of the central space 28. Although not shown, the I/E station 38 has a recording medium load/unload opening which is formed in a front wall of the cabinet 22 facing an operator. Hence, the recording medium supplied to the I/E station 38 through the opening is held by the handler 26, allowing the recording medium to be placed in a predetermined one of the pallets 34 which is designated by the server machine 12. Further, the handler 26 unloads the recording medium held in the predetermined pallet 34 which is designated by the server machine 12, allowing the recording medium to be taken out through the I/E station 38 and the opening of the I/E station 38. Similar to the handler 26, only one I/E station 38 provided in one library unit 16 so that it is used as equipment to be shared among the three virtual units 36₀ (VL0), 36₁(VL1) and 36₂ (VL2).

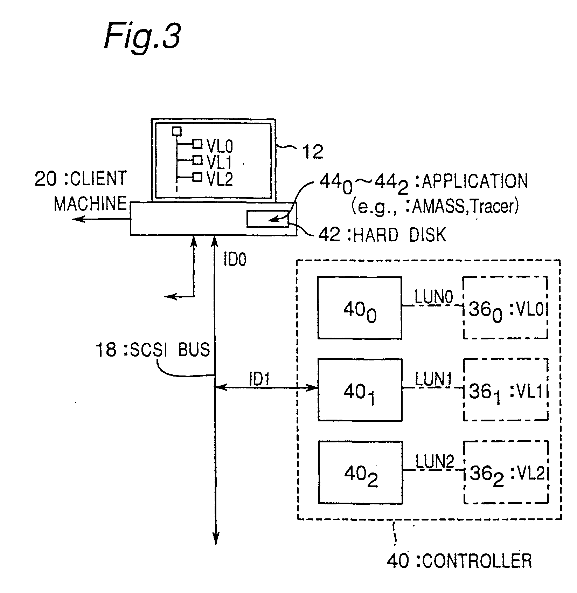

The library unit 16 further has a controller 40 for controlling driving of the handler 26, the storage stations and the reproduction stations in response to an instruction from the server machine 12. The controller 40 is connected with the server machine 12 for communication via the SCSI bus 18. More specifically, for an input/output interface, used in this embodiment is a SCSI capable of driving eight devices (whose identification numbers being ID0 through ID7). Therefore, the identification number ID0 is assigned to the server machine 12 and the identification number ID1 is assigned to the controller 40. Further, as shown in Fig. 3, logically the controller 40 is divided into three controls 40₀, 40₁ and 40₂ (whose logic unit numbers being LUN0, LUN1 and LUN2). The controls 40₀, 40₁ and 40₂ (whose logic unit numbers being LUN0, LUN1 and LUN2) correspond to the three virtual units 36₀, 36₁ and 36₂ described above.

Referring again to Fig. 3, the server machine 12 includes a storage memory (e.g., hard disk 42). The hard disk 42 stores three dedicated applications 44₀, 44₁ and 44₂ (e.g., Tracer™, AMASS™) which correspond to the three recording media (CD-ROMs, DVD-RAMs and DVD-ROMs). The applications 44₀, 44₁ and 44₂ correspond respectively to the logic unit numbers LUN0, LUN1 and LUN2 (namely, the virtual units 36₀, 36₁ and 36₂). The server machine 12 and the controller 40 are set up such that the virtual units 36₀, 36₁ and 36₂ operate respectively in accordance with the corresponding applications 44₀, 44₁ and 44₂. Instead, one application may control more than one logic units.

With the system 10 so constructed, as shown in Fig. 3, the three virtual units 36₀, 36₁ and 36₂ are displayed on screens of the server machine 12 and the client machine 20. That shows that, although only one library unit 16 is connected with the system 10 in reality, when viewed from the server machine 12 and the client machine 20, it appears as if three library units are connected with the system 10.

This allows the server machine 12 or the client machine 20 to energize any desired one of the virtual units 36₀, 36₁ and 36₂ which are displayed on the screen and to reproduce a desired recording medium. More specifically, in the server machine 12 or the client machine 20, as reproduction is instructed together with a designation of a specific pallet stored in the storage station 30₀ of the virtual unit 36₀, the associated application 44₀ stored in the hard disk 42 of the server machine 12 energizes. This in turn causes the controller 40 to control an operation of the associated virtual unit 36₀. As a result, the handler 26 ascends or descends along the guide 24, moving close to the designated pallet 34. Next, the handler 26 unloads the designated pallet 34 together with the CD-ROM held in the pallet 34 from the storage station 30₀ and holds the CD-ROM. Subsequently, the handler 26 moves to a position opposed to a designated CD-ROM drive of the associated reproduction station 32₀, rotates if necessary, and passes the CD-ROM together with the pallet 34 to the drive.

After the completion of the reproduction of the CD-ROM, the handler 26 receives the CD-ROM and the pallet from the drive, and returns them to the original position within the storage station 30₀. Likewise, the DVD-RAMs and the DVD-ROMs held in the virtual units 36₁, 36₂ are transported between the storage stations 30₁, 30₂ and the reproduction stations 32₁, 32₂.

For unloading of the recording media from the library unit 16 as well, in a similar manner, a desired virtual unit and a wanted pallet shown on the screen are designated using the server machine 12 or the client machine 20. This energizes the corresponding application installed in the server machine 12, whereby the controller 40 operates so that the handler 26 ascends or descends, unloads the designated pallet together with the CD-ROM from the storage station, and passes them to the I/E station 38.

The foregoing is directed to one preferred embodiment of the present invention, and therefore, the present invention is not limited to this.

For example, the recording media are not limited to those described above. Any recording media capable of being managed by the library units are applicable to the present invention, in particular including tape units such as DLT, 3590, 8mm and AIT, DVD-RAM, DVD-ROM, DVD-R, DVD+RW, DVD-RW, CD-ROM, CD-R, CD-RW, CD-Audio, CD-I, CD-DA, CD-ROM XA and optical magnetic disks (MO).

In addition, although in the previous embodiment SCSI is used for the input/output interface between the server machine 12 and the controller 40, it may be replaced by RS232C, a network interface (e.g., fiber channel, Ethernet), a built-in interface mounted in a server machine, and the like.

Further, although only two pieces of equipment (one server machine 12 and one controller 40) are connected to the SCSI bus which can accept up to eight machines in the previous embodiment, the present invention is not limited to this. Of course, other machines may be additionally connected.

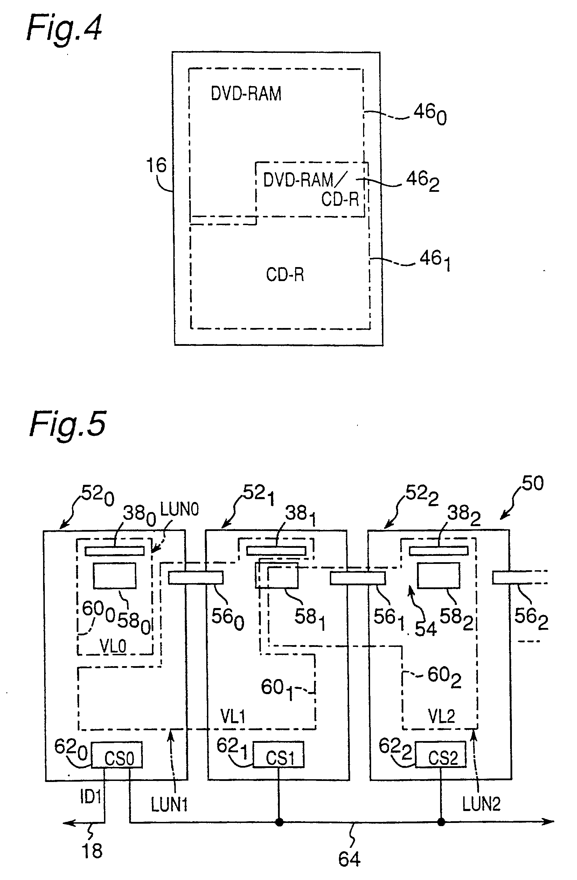

While the respective virtual units 36₀, 36₁ and 36₂ are independent of other virtual units in the previous embodiment, a plurality of virtual units may share a portion of a recording medium storage/reproduction station. For example, a DVD-RAM drive can reproduce CD-Rs. Hence, as shown in Fig. 4, a recording medium storage/reproduction station 46₀ for DVD-RAMs may be partially used as a portion of a recording medium storage/reproduction station 46₁ for CD-Rs. In this instance, when it becomes impossible to store recording media each in a storage area only for DVD-RAMs or a storage area only for CD-Rs, the recording media can be stored temporarily in a shared area (DVD-RAM/CD-R station 46₂). This allows the library unit 16 to be used so effectively.

Besides, although the data library is formed by one library unit in the preferred embodiment above, the present invention is applicable to a data library which is formed by connecting a plurality of library units with each other.

For example, in Fig. 5, a data library 50 is formed by a plurality of library units 52₀, 52₁, 52₂ ... which are arranged in a row. The library units 52₀, 52₁, 52₂ ... are serially linked by a medium transportation section 54 so that a recording medium can be transported among the library units. The medium transportation section 54 has delivery mechanisms 56₀, 56₁, 56₂ ... for delivery of a recording medium between the adjacent library units, and transportation mechanisms 58₀, 58₁, 58₂ ... for transporting a recording medium supplied from the adjacent library unit through the delivery mechanism to the recording medium reproduction section or I/E stations 38₀, 38₁, 38₂ ..., or the like. The handler described in the first embodiment may be used for the transportation mechanisms.

Hence, by the use of the medium transportation section 54, a recording medium stored in the library unit 52₀ is transported to the first library unit 52₁ where it is thereafter reproduced in the reproduction section of the library unit 52₁ or unloaded from the I/E station 38₁ of the library unit 52₁. The medium transportation section 54 is described in detail in the U.S. patent application No. 09/380,217 filed by the applicant of the present application and also the corresponding Japanese Patent Application Laid-Open Publication No. H9-22561, and the disclosure of the U.S. patent application is incorporated herein by reference.

The storage section and the reproduction section of each one of the library units 52₀, 52₁, 52₂ ... are divided logically into a plurality of virtual units. In this embodiment, the storage section and the reproduction section of the library unit 52₀ are divided into a virtual unit 60₀ and a virtual unit 60₁. The storage section and the reproduction section of the library unit 52₁ are incorporated into a portion of the virtual unit 60₁, and the remaining portion exists as a virtual unit 60₂. The storage section and the reproduction section of the library unit 52₂ exist entirely as a portion of the virtual unit 60₂. As in the first embodiment which uses only one library unit, each virtual unit includes a plurality of pallets for storing a plurality of recording media and one or more reproduction apparatuses for reproducing these recording media. Where one virtual unit is composed of portions of several library units, each virtual unit portion (e.g., a portion of the virtual unit 60₁ contained in the library unit 52₀) naturally includes a plurality of pallets for storing a plurality of recording media and one or more reproduction apparatuses for reproducing the recording media.

Even where a library unit housing the transportation mechanisms (handlers) 58₀, 58₁, 58₂ ... is divided into a plurality of virtual units, the transportation mechanisms 58₀, 58₁, 58₂ ... are shared by the divided virtual units. On the other hand, the I/E stations 38₀, 38₁, 38₂ ... are assigned each to each one of the virtual units. For example, the I/E stations 38₀, 38₁, 38₂ ... of the library units 52₀, 52₁, 52₂ ... are assigned to the virtual units 60₀, 60₁, 60₂ ..., respectively. The delivery mechanism 56₀ which links the library units 52₀, 52₁ is assigned to the virtual unit 52₁, which allows to transport a recording medium in the virtual unit 60₁ within the library unit 52₀ to the I/E station 38₁ of the library unit 52₁ through the delivery mechanism 56₀. Further, when one virtual unit is assigned to the library unit 52₀ and other virtual unit is assigned to the adjacent library unit 52₁, the delivery mechanism functions as an I/E station between the two virtual units. Likewise, the delivery mechanism 56₁ which links the library units 52₁, 52₂ is assigned to the virtual unit 60₂, which allows to transport a recording medium in the virtual unit 60₂ within the library unit 52₁ to the I/E station 38₂ of the library unit 52₂ through the delivery mechanism 56₁.

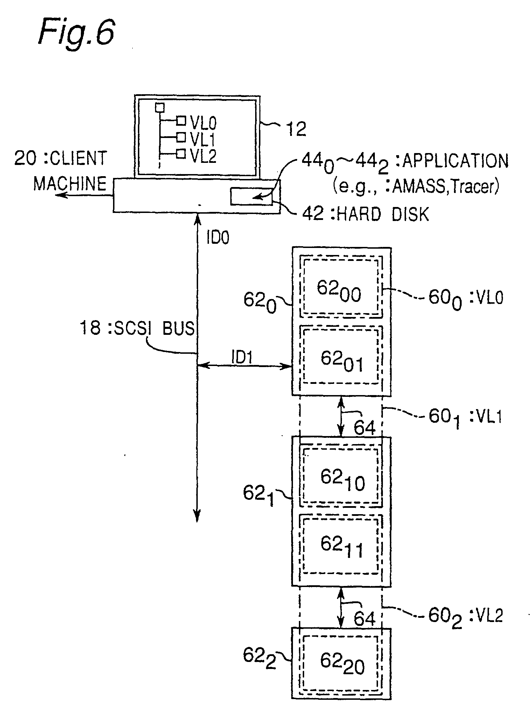

Controllers 62₀, 62₁, 62₂ ... of the library units 52₀, 52₁, 52₂ ... are set up so as to control operations of the respective associated library units. Further, as shown in Fig. 6, logically the respective controllers 62₀, 62₁, 62₂ ... are divided appropriately in accordance with the virtual units 60₀, 60₁, 60₂ ... which are divided as described above. More specifically, the controller 62₀ is divided into a control section 62₀₀ which corresponds to the virtual unit 60₀ and a control section 62₀₁ which corresponds to a portion of the virtual unit 60₁ which exists in the library unit 52₀. Likewise, the controller 62₁ is divided into a control section 62₁₀ which corresponds to the remaining portion of the virtual unit 60₁ in the library unit 52₁ and a control section 62₁₁ which corresponds to a portion of the different virtual unit 60₂ in the library unit 52₁. However, since the virtual unit 60₂ alone is assigned to the library unit 52₂, the controller 62₂ is in its entirety assigned to a control section 62₂₀ of the virtual unit 60₂.

As described above, the respective controllers 62₀, 62₁, 62₂ ... are divided logically, and each one of the controllers 62₀, 62₁, 62₂ ... must control, without any interference, the portion of the corresponding virtual unit (e.g., the virtual unit 60₁) which physically exists across more than one library units. To this end, the controllers 62₀, 62₁, 62₂ ... are connected with each other by a communication device 64, and further, the controller 62₀ is connected with a server machine not shown via the communication device. Hence, the controllers 62₀, 62₁, 62₂ ..., when viewed as a whole, constitute one integrated controller which is divided logically and control each one of the virtual units 60₀, 60₁, 60₂ ... in response to an instruction from the server machine. As in the first embodiment described above, the SCSI bus 18 is used for the communication device. The identification number ID0 of the SCSI bus 18 is assigned to the server machine and the identification number ID1 is assigned to the controller 62₀. Also, the virtual units 60₀, 60₁, 60₂ ... are tied with the logic unit numbers are LUN0, LUN1, LUN3 ... by the identification number ID1.

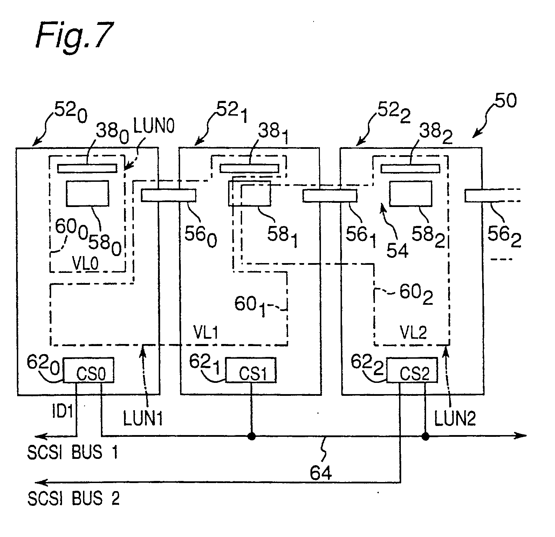

The electric connection between the server machine and the controller shown in Fig. 5, of course, is one example. For example, as shown in Fig. 7, the controller 62₀ may be connected with the server machine via a SCSI bus 1, and the other controllers 62₁, 62₂ ... may be connected with the server machine via a different SCSI bus 2. In addition, either one of the server machine and the controllers may be connected using a network interface (e.g., fiber channel, Ethernet).

With the library so constructed, the screen of the server machine or the client machine does not show that a plurality of library units exist but shows only the virtual units 60₀, 60₁, 60₂ ..., which a user refers to for selecting, reproducing and unloading a desired recording medium. For example, when a recording medium is to be reproduced, a user designates a virtual unit displayed on the screen and selects a desired recording medium which is stored in the virtual unit. As shown in Fig. 5, for example, for the purpose of reproducing a recording medium which is stored in the portion of the virtual unit 60₁ portion in the library unit 52₀, the control section 62₀₁ which corresponds to this virtual unit portion unloads and reproduces the wanted recording medium. Likewise, when a recording medium stored in the virtual unit 60₁ portion of the library unit 52₁ is to be reproduced, the control section 62₁₀ which corresponds to this virtual unit portion unloads and reproduces the wanted recording medium.

For unloading a recording medium, where a desired recording medium is stored in the virtual unit 60₀, for example, this recording medium is unloaded through the I/E station 38₀ of the library unit 52₀. However, where a desired recording medium is stored in a portion of the virtual unit 60₁ of the library unit 52₀, this recording medium is transported by the transportation mechanism 58₀ inside the library unit 52₀. Next, the recording medium is passed to the delivery mechanism 56₀ from the transportation mechanism 58₀, thereafter supplied by the transportation mechanism 58₁ which is disposed within the library unit 52₁ to the I/E station 38₁, and unloaded to outside through the I/E station 38₁.

Although one virtual unit utilizes the storage section and the reproduction section only between adjacent library units, the present invention is not limited to this. For example, portions each of two or more non-adjacent library units may constitute one virtual unit.

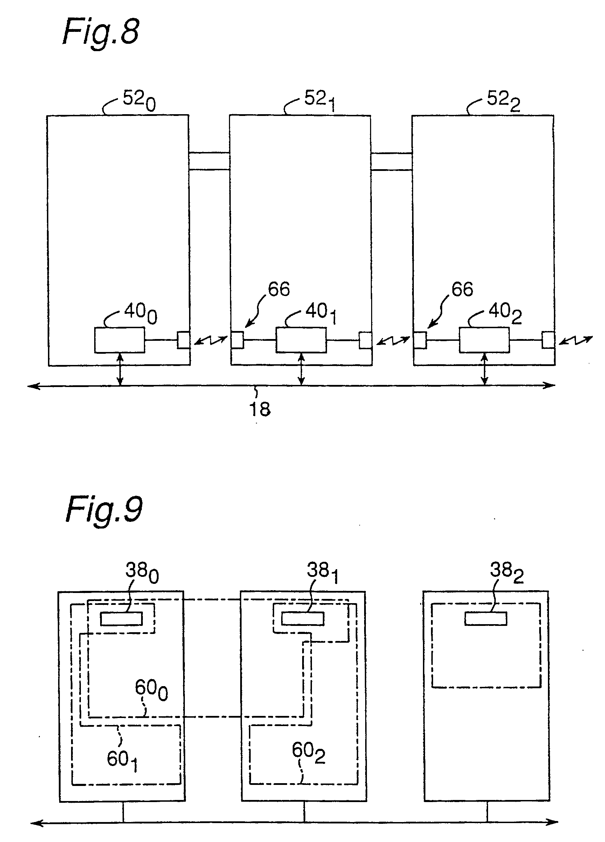

Further, a communication cable may be used as the communication device 64 for the connection of controllers. Alternatively, as shown in Fig. 8, where the library units 52₀, 52₁, 52₂ ... are arranged in a row, another communication device 66 utilizing infrared light may be used to connect the controllers 62₁, 62₂ ... in series. However, when a plurality of library units are located in different places, another communication means utilizing light or radio (e. g., Altair-J, AT&T WaveLAN) may be used.

While the I/E stations 38₀, 38₁, 38₂ ... are each assigned to each one of the virtual units 60₀, 60₁, 60₂ ... in the previous embodiment, it is of course possible to allow more than virtual units to share one I/E station as shown in Fig. 9. In this instance, a controller may control virtual units other than those of a library unit which houses this controller.

As can be seen from the foregoing, with the library system according to the present invention, it is possible to handle a plurality of recording media using one library unit. Hence, even when a plurality of recording media are to be handled, one library unit is sufficient if the recording media to be handled are not in a great number. Further, where a plurality of library units are used, it is possible to make a sufficient use of a medium storage capacity of each library unit. Moreover, even where a user uses a plurality of applications, it is not necessary to purchase the same number of library units as the number of the applications, which is economical.

## Claims

1. A library system comprising a host computer, a library unit and a communication apparatus which connects said host computer and said library unit with each other for communications, **characterized in that**:
(a) said library unit comprises one cabinet, and disposed in said cabinet are: a plurality of recording medium storage sections; a plurality of recording medium reproduction sections which receive recording media which are stored in said recording medium storage sections and reproduce the recording media; a recording medium transportation section for transporting the recording media each between said recording medium storage sections and said recording medium reproduction sections; and a controller for controlling said recording medium reproduction sections and said recording medium transportation section,
said plurality of recording medium storage sections are divided into a plurality of storage stations,
said plurality of recording medium reproduction sections are divided into a plurality of reproduction stations,
each storage station and the corresponding reproduction station constitute a virtual unit, and
(b) said host computer includes applications which correspond to said virtual units to control said virtual units individually.

2. A library system comprising a host computer, a first and a second library units, and a communication apparatus which connects said host computer and said first and said second library units with each other for communications, **characterized in that**:
(a) each one of said first and said second library units comprises one cabinet which is independent of other library units, and disposed in said cabinet are: a recording medium storage section; a recording medium reproduction section which receives a recording medium which is stored in said recording medium storage section and reproduces the recording medium; a recording medium transportation section for transporting the recording medium between said recording medium storage section and said recording medium reproduction section; and a controller for controlling said recording medium reproduction section and said recording medium transportation section,
at least a portion of said recording medium storage section and at least a corresponding portion of said recording medium reproduction section constitute a virtual unit portion,
a virtual unit portion in said first library unit and a virtual unit portion in said second library unit constitute one virtual unit, and
(b) said host computer includes applications which correspond to said virtual units to control said virtual units individually.
